# EUROPEAN PATENT APPLICATION

(11) **EP 1 043 339 A1**
(43) Date of publication of application: **11.10.2000**
(21) Application number: 98961518.2
(22) Date of filing: 24.12.1998
(51) Int. Cl.: C08F 4/642, C08F 10/00

(54) **POLYMERIZATION CATALYST AND PROCESS FOR PRODUCING OLEFIN POLYMER OR COPOLYMER WITH THE SAME**

(30) Priority: 25.12.1997 JP 35770597
(71) Applicant: DENKI KAGAKU KOGYO KABUSHIKI KAISHA, Chiyoda-ku, Tokyo 100-0006 (JP)
(72) Inventor: ARAI, Toru, Denki Kagaku Kogyo K.K. Sogo Kenkyusho, Tokyo 194-0023 (JP); SUZUKI, Shigeru, Denki Kagaku Kogyo K.K., Tokyo 194-0023 (JP); OTSU, Toshiaki, Denki Kagaku Kogyo K.K., Tokyo 194-0023 (JP)
(74) Representative: Hartz, Nikolai F., Dr.
(86) International application number: JP9805858
(87) International publication number: WO9933882

(57) **Abstract**

A polymerization catalyst for a (co)polymer of an olefin, which comprises a transition metal compound of the following formula (1) or (2) as a component. Further, a method for producing an olefin (co)polymer, which employs a polymerization catalyst comprising this transition metal compound and a cocatalyst. In the following formulae, BInd1, BInd2 and BInd are (un)substituted benzoindenyl groups, Cp is an (un)substituted cyclopentadienyl group, an (un)substituted indenyl group or an (un)substituted fluorenyl group, Y is a carbon atom having substituents, X is hydrogen, halogen, etc., and M is Zr, Hf or Ti.

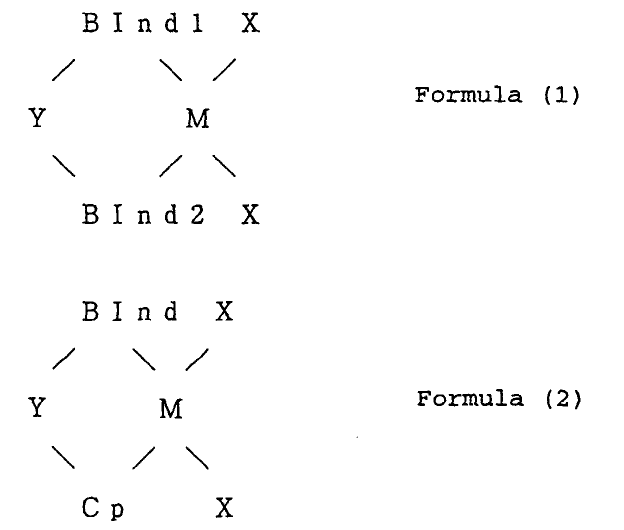

## Description

### TECHNICAL FIELD

The present invention relates to a polymerization catalyst for an olefin polymer or copolymer, which comprises a specific transition metal compound as a component, and a method for producing an olefin polymer or copolymer, which employs it.

### BACKGROUND ART

For a polymer or copolymer of an olefin such as ethylene or propylene, a method for production is known which employs a so-called homogeneous type Ziegler-Natta catalyst system comprising a transition metal compound and an organic aluminum compound.

For example, JP-B-7-37488 discloses a method for polymerizing an olefin, which employs a metal complex of e.g. zirconium having bridged or non-bridged two substituted cyclopentadienyl groups and a cocatalyst such as methyl alumoxane. Further, JP-A-7-39432 discloses a metal complex having a chiral ligand and a method for polymerizing an olefin and a method for producing a stereoregular polyolefin, characterized by employing it.

However, as a factor which is preventing these catalysts from being used for industrial production, it may be mentioned that as the activities are not yet adequate, a cocatalyst is used in a large excess amount relative to the main catalyst, whereby the cost for the cocatalyst is substantial.

Further, JP-A-6-184179 and JP-A-6-345809 disclose a complex having a benzoindenyl group as a ligand and a method of its use as an olefin polymerization catalyst, and each discloses only a complex having a silicon compound as a bridge structure in Examples and the detailed description. However, when an ethylene-α-olefin copolymer is to be produced by the method of employing the complex having a silicon compound as a bridge structure, the molecular weight of the obtainable polymer tends to be too large, and it will be difficult to obtain a polymer of wax-type having a molecular weight of at most 100,000. Further, there is a difficulty in industrial applicability, such that the viscosity of the solution tends to be high.

JP-A-8-12712 discloses a method for producing an ethylene-norbornane copolymer, which employs rac isopropylidenebis(1-indenyl)zirconium dichloride. However, even by this method, the activity per unit time and the productivity per unit catalyst are not adequate, and a catalyst and production method having higher activity and productivity are desired.

The present invention is intended to provide a polymerization catalyst for an olefin polymer or copolymer, which comprises a specific transition metal compound as a component, and a method for producing an olefin polymer or copolymer, particularly an olefin polymer or copolymer wax having a low to intermediate molecular weight, which employs it and which is practical with very high activity.

### DISCLOSURE OF THE INVENTION

The present invention provides a polymerization catalyst for an olefin polymer or copolymer, which comprises a transition metal compound of the following formula (1) or (2) as a component. Further, the present invention provides a method for producing an olefin polymer or copolymer, which employs a polymerization catalyst comprising such a transition metal compound and a cocatalyst. 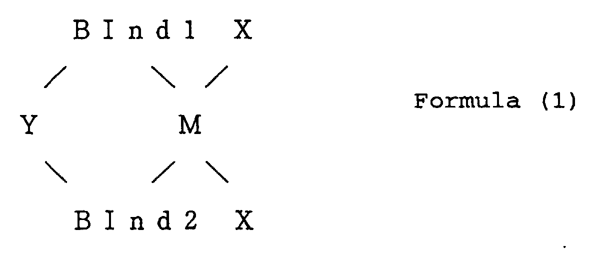 wherein BInd1 and BInd2 are unsubstituted or substituted benzoindenyl groups which can be represented by the following formulae K1 and K2, and BInd1 and BInd2 may be the same or different from each other. 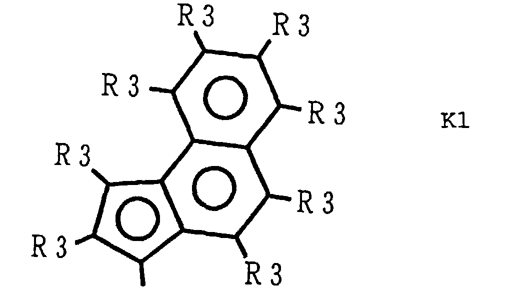 wherein R3 is hydrogen, a C₁₋₂₀ alkyl group, a C₆₋₁₄ aryl group, a C₇₋₂₀ alkyl aryl group, a C₇₋₂₀ arylalkyl group, a halogen atom, an OSiR₃ group, a SiR₃ group or a PR₂ group (each R is a C₁₋₁₀ hydrocarbon group), and they may be the same or different from one another. Further, adjacent R3 groups may together form an aromatic ring or an aliphatic ring of from 5 to 8 members. 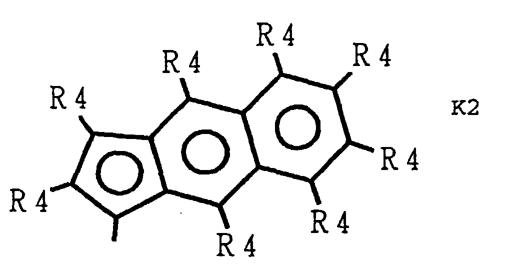 wherein R4 is hydrogen, a C₁₋₂₀ alkyl group, a C₆₋₁₄ aryl group, a C₇₋₂₀ alkylaryl group, a C₇₋₂₀ arylalkyl group, a halogen atom, an OSiR₃ group, a SiR₃ group or a PR₂ group (each R represents a C₁₋₁₀ hydrocarbon group), and they may be the same or different from one another. Further, adjacent R4 groups may together form an aromatic ring or an aliphatic ring of from 5 to 8 members.

As BInd1 or BInd2, 4,5-benzo-1-indenyl, 5,6-benzo-1-indenyl, 6,7-benzo-1-indenyl, 4,5-naphtho-1-indenyl, 4,5-pyrene-1-indenyl, 4,5-triphenylene-1-indenyl, α-acenaphtho-1-indenyl, 1-cyclopenta[1]phenanthryl, 3-cyclopenta[c]phenanthryl, 2-methyl-4,5-benzo-1-indenyl, 2-methyl-α-acenaphtho-1-indenyl or 2-methyl-1-cyclopenta [1]phenanthryl, may, for example, be mentioned.

Y is a carbon atom which has bonds to BInd1 and BInd2 and which also has substituents, and a substituted methylene group which is substituted by hydrogen, a C₁₋₂₀ alkyl group, a C₆₋₁₄ aryl group, a C₆₋₁₂ alkylaryl group or a C₆₋₁₂ arylalkyl group, wherein the substituents may be the same or different from each other, or Y may have a cyclic structure.

Y may, for example, be -CH₂-, -CMe₂-, -CPh₂-, cyclohexylidene or cyclopentylidene. Here, Me represents a methyl group, and Ph represents a phenyl group.

X is hydrogen, halogen, an alkyl group, an aryl group, a silyl group, an alkoxy group or a dialkylamide group. Specific examples thereof may be chlorine, bromine, a methyl group, an ethyl group, a phenyl group, a trimethylsilyl group, a methoxy group, an ethoxy group, an isopropyl group or a dialkylamido group.

M is a IV Group metal such as Zr, Hf or Ti. 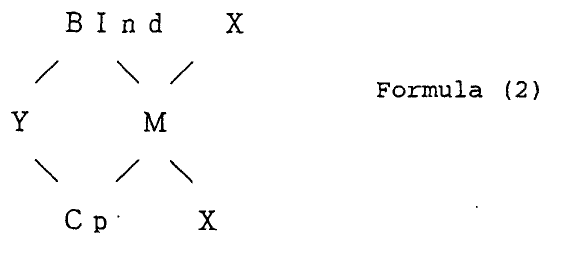 wherein BInd is an unsubstituted or substituted benzoindenyl group and represents the same structure as BInd1 or BInd2 in the formula (1).

Cp is an unsubstituted or substituted cyclopentadienyl group, an unsubstituted or substituted indenyl group, or an unsubstituted or substituted fluorenyl group, represented by the following formula K3, K4 or K5: 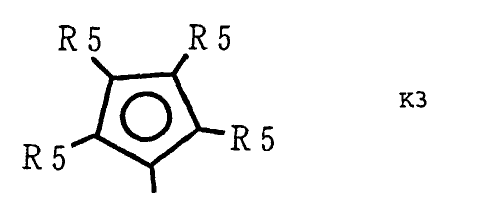 wherein R5 is hydrogen, a C₁₋₂₀ alkyl group, a C₆₋₁₀ aryl group, a C₇₋₂₀ alkylaryl group, a halogen atom, an OSiR₃ group, a SiR₃ group or a PR₂ group (wherein each R represents a C₁₋₁₀ hydrocarbon group), and they may be the same or different from one another. 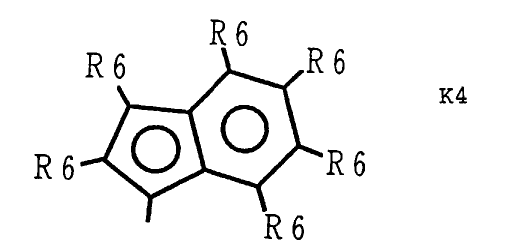 wherein R6 is hydrogen, a C₁₋₂₀ alkyl group, a C₆₋₂₀ aryl group, a C₇₋₂₀ alkylaryl group, a halogen atom, an OSiR₃ group, a SiR₃ group or a PR₂ group (wherein each R represents a C₁₋₁₀ hydrocarbon group), and they may be the same or different from one another. 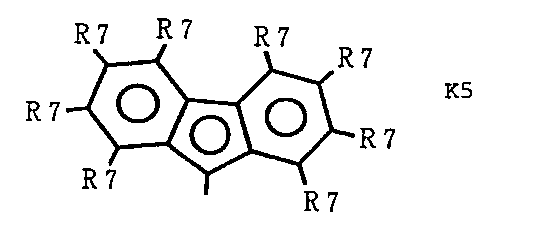 wherein R7 is hydrogen, a C₁₋₂₀ alkyl group, a C₆₋₁₀ aryl group, a C₇₋₂₀ alkylaryl group, a halogen atom, an OSiR₃ group, a SiR₃ group or a PR₂ group (wherein each R represents a C₁₋₁₀ hydrocarbon group), and they may be the same or different from one another.

The unsubstituted cyclopentadienyl group may be cyclopentadienyl, and the substituted cyclopentadienyl group may, for example, be 2-alkyl-4-aryl-1-cyclopentadienyl, 2-alkyl-4,5-diaryl-1-cyclopentadienyl, 2,5-dialkyl-4-aryl-1-cyclopentadienyl, 2,4-dialkyl-5-aryl-1-cyclopentadienyl, 2-aryl-1-cyclopentadienyl, 2-aryl-4-alkyl-1-cyclopentadienyl, 2-aryl-4,5-dialkyl-1-cyclopentadienyl, 2,3,4,5-tetraalkylcyclopentadienyl, 2,3,4,5-tetraarylcyclopentadienyl, 2-alkyl-1-cyclopentadienyl, 2,4-dialkyl-1-cyclopentadienyl, 2,4,5-trialkyl-1-cyclopentadienyl, 2-trialkylsilyl-1-cyclopentadienyl, 2-trialkylsilyl-4-alkyl-1-cyclopentadienyl or 2-trialkylsilyl-4,5-dialkyl-1-cyclopentadienyl.

The unsubstituted indenyl group may be 1-indenyl, and the substituted indenyl group may, for example, be 2-alkyl-1-indenyl, 4-alkyl-1-indenyl, 4-aryl-1-indenyl, 2,4-dialkyl-1-indenyl, 2,4,6-trialkyl-1-indenyl, 2,5-dialkyl-1-indenyl, 2,5,6-trialkyl-1-indenyl, 2,4,5-trialkyl-1-indenyl, 2-alkyl-4-aryl-1-indenyl, 2,4-diaryl-1-indenyl, 2-aryl-1-indenyl, 2,6-dialkyl-4-aryl-1-indenyl, 2-alkyl-5-aryl-1-indenyl, 2-alkyl-5,6-diaryl-1-indenyl, 2-alkyl-4,5-diaryl-1-indenyl, or 2-alkyl-4,6-diaryl-1-indenyl.

The unsubstituted fluorenyl group may be a 9-fluorenyl group, and the substituted fluorenyl group may, for example, be 2,7-dimethylfluorenyl.

Y is a carbon atom which has bonds to BInd and Cp and which also has substituents, and a substituted methylene group which is substituted by hydrogen, a C₁₋₁₀ alkyl group, a C₆₋₁₄ aryl group, a C₆₋₁₂ alkylaryl group or a C₆₋₁₂ arylalkyl group, wherein the substituents may be the same or different from each other, and Y may have a cyclic structure.

Y may, for example, be -CH₂-, -CMe₂- or -CPh₂-, a cyclohexylidene group or cyclopentylidene group.

X is hydrogen, halogen, an alkyl group, an aryl group, a silyl group, an alkoxy group or a dialkylamide group. Specific examples thereof may be chlorine, bromine, a methyl group, an ethyl group, a phenyl group, a trimethylsilyl group, a methoxy group, an ethoxy group, an isopropoxy group or a dialkylamide group.

M is a Group IV metal such as Zr, Hf or Ti.

Particularly preferred is a transition metal compound for polymerization of an olefin polymer or copolymer, wherein Y is carbon which has bonds to BInd1 and BInd2 in the formula (1), or bonds to BInd and Cp in the formula (2) and which also has other substituents, and a substituted methylene group which is substituted by hydrogen, an alkyl group or an aryl group, and M is Zr.

The following compounds may be mentioned as examples of such a transition metal compound. For example, there may be mentioned dimethylmethylenebis(4,5-benzo-1-indenyl)zirconium dichloride, di-n-propylmethylenebis(4,5-benzo-1-indenyl)zirconium dichloride, di-i-propylmethylenebis(4,5-benzo-1-indenyl)zirconium dichloride, cyclohexylidenebis(4,5-benzo-1-indenyl)zirconium dichloride, cyclopentylidenebis(4,5-benzo-1-indenyl)zirconium dichloride, diphenylmethylenbis(4,5-benzo-1-indenyl)zirconium dichloride, dimethylmethylene(1-indenyl)(4,5-benzo-1-indenyl)zirconium dichloride, dimethylmethylene(1-fluorenyl) (4,5-benzo-1-indenyl)zirconium dichloride, dimethylmethylenebis(5,6-benzo-1-indenyl)zirconium dichloride, dimethylmethylenebis(4,5-naphtho-1-indenyl)zirconium dichloride, dimethylmethylenebis(α-acenaphtho-1-indenyl)zirconium dichloride, dimethylmethylenebis(1-cyclopenta[1]phenanthryl)zirconium dichloride or dimethylmethylenebis(cyclopenta[c]phenanthryl)zirconium dichloride. In the foregoing, dimethylmethylene in the naming may also be referred to as isopropylidene.

In the foregoing, the Zr complex was exemplified, but also with respect to the Ti or Hf complex, compounds similar to the above may suitably be employed. Further, as the foregoing complex, a raceme or a meso-form may be employed. Preferably, a raceme is employed. Further, the D-isomer or the L-isomer may be employed.

As the olefin to be used in the present invention, a C₂₋₂₀ α-olefin such as ethylene, propylene, 1-butene, 1-hexene, 4-methyl-1-pentene or 1-octene, or a C₃₋₂₀ cyclic olefin such as norbornane, norbornadiene or dicyclopentadiene, is suitable. Among these olefins, two or more may be employed for copolymerization. Further, a diene such as butadiene, isoprene, 1,5-hexadiene, 1,7-octadiene, divinylbenzene or vinylcyclohexene, may also be employed.

Particularly preferred is polymerization of ethylene, copolymerization of ethylene and an α-olefin such as propylene, copolymerization of ethylene, an α-olefin and a diene, polymerization of propylene, copolymerization of propylene with other α-olefin, and copolymerization of ethylene and a cyclic olefin, such as ethylene and norbornane. Further, copolymerization of ethylene-α-olefin-styrene or ethylene-norbornane-styrene, is also possible with high activities. Especially, in copolymerization of ethylene-a cyclic olefin or ethylene-a cyclic olefin-styrene, it is possible to obtain a copolymer having an optional composition by changing the feeding ratio of monomers, or a copolymer having an optional molecular weight with a weight average molecular weight ranging from 10,000 to 1,000,000, preferably from 30,000 to 300,000, by employing a proper polymerization temperature or a known chain transfer agent.

Further, it is preferred to employ as monomers ethylene and R1HC=CHR2 (wherein R1 and R2 are hydrogen or C₁₋₂₀ alkyl groups, or R1 and R2 may together form a cyclic structure) to obtain an olefin polymer or copolymer, particularly an ethylene copolymer with a low to intermediate molecular weight having a density of from 0.82 to 0.94 g/cm³ and a melting point of from 50 to 130°C.

Further, in the present invention, it is possible to lower the molecular weight of the copolymer by increasing the content of an α-olefin at the time of copolymerization of ethylene with an α-olefin, whereby an olefin copolymer wax can easily be produced. In the present invention, the wax means a polymer or copolymer having a weight average molecular weight of from 500 to 100,000, which may usually be referred to as an oligomer.

Further, it is possible to produce a copolymer wax easily by polymerization at a higher polymerization temperature under a condition of an ethylene partial pressure of at most 50MPa, and it is thereby possible to control the molecular weight and the molecular weight distribution. Further, if necessary, polymerization may be carried out in the presence of a chain transfer agent such as hydrogen to control the molecular weight of the wax or to lower the proportion of the terminal vinyl groups.

Further, the present invention provides a method for producing an olefin polymer or copolymer, wherein polymerization is carried out by means of a polymerization catalyst comprising such a transition metal compound and a cocatalyst.

As the cocatalyst to be used in the present invention, it is possible to use a cocatalyst which has been heretofore commonly used in combination with a transition metal compound. As such a cocatalyst, an aluminoxane (or referred to also as an alumoxane) or a boron compound, is suitably employed.

Further, the present invention provides a method for producing an olefin polymer or copolymer, wherein the cocatalyst employed in such a case is an aluminoxane (or referred to also as an alumoxane) of the following formula (3) or (4): 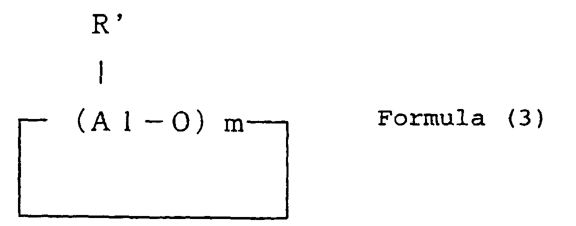 wherein R' is a C₁₋₅ alkyl group, a C₆₋₁₀ aryl group or hydrogen, and m is an integer of from 2 to 100, wherein the respective R' may be the same or different from one another; 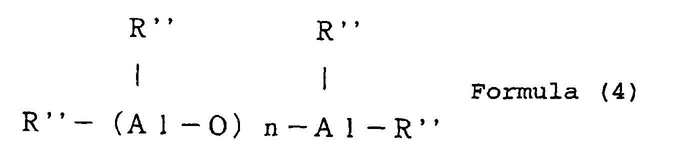 wherein R'' is a C₁₋₅ alkyl group, a C₆₋₁₀ aryl group or hydrogen, and n is an integer of from 2 to 100, wherein the respective R'' may be the same or different from one another;

As the aluminoxane, methylalumoxane, ethylalmoxane or triisobutylalumoxane is preferably employed, and particularly preferably, methyl alumoxane is employed. If necessary, a mixture of different types of alumoxanes may be employed. Further, such an alumoxane may be used in combination with an alkyl aluminum such as trimethylaluminum, triethylaluminum or triisobutylaluminum, or an alkyl aluminum containing a halogen, such as dimethylaluminum chloride. Such an alkyl aluminum is effective to remove impurities such as water content in the olefin. However, if the solvent, the olefin or the like is preliminarily dehydrated or purified by a known method, such an alkyl aluminum may not be employed.

The boron compound to be used as a cocatalyst, is, for example, N,N-dimethylaniliniumtetra(pentafluorophenyl) borate, trityltetra(pentafluorophenyl) borate, lithiumtetra(pentafluorophenyl) borate or tri(pentafluorophenyl)borane.

Such a boron compound may be used together with the above organic aluminum compound.

Especially when a boron compound is used as a cocatalyst, it is effective to add an alkyl aluminum compound such as triisobutylaluminum to remove impurities which may present adverse effects to polymerization, such as water contained in the polymerization system.

For the production of the copolymer of the present invention, the above mentioned olefin, the transition metal compound as a metal complex and the cocatalyst are contacted. There is a method wherein the polymerization is carried out in a liquid monomer without using any solvent, or a method wherein a saturated aliphatic or aromatic hydrocarbon or a halogenated hydrocarbon, such as pentane, hexane, heptane, cyclohexane, benzene, toluene, xylene, chloro-substituted benzene, chlorosubstituted toluene, methylene chloride or chloroform, is used alone or in combination as a mixed solvent. Further, if necessary, it is possible to employ a method such as batch polymerization, continuous polymerization, batch-type polymerization or preliminary polymerization.

The polymerization temperature is suitably from -78°C to 200°C, preferably from 0°C to 180°C. A polymerization temperature lower than -78°C is industrially disadvantageous, and if it exceeds 200°C, decomposition of the metal complex is likely to take place, such being undesirable.

In a case where an organic aluminum compound is used as a cocatalyst, it is used in an aluminum atom/complex metal atom ratio of from 0.1 to 100,000, preferably from 10 to 10,000, to the metal of the complex. If the ratio is smaller than 0.1, the metal complex can not effectively be activated, and it it exceeds 100,000, such tends to be economically disadvantageous.

In a case where a boron compound is used as a cocatalyst, it may be used in a boron atom/complex atom ratio of from 0.01 to 100, preferably from 0.1 to 10, particularly preferably 1.

If it is smaller than 0.01, the metal complex can not effectively be activated, and if it exceeds 100, such tends to be economically disadvantageous.

The metal complex and the cocatalyst may be mixed and adjusted outside the polymerization tank, or may be mixed in the tank at the time of polymerization.

To the copolymer of the present invention, additives or adjuvants which are commonly used for polymers, may be incorporated within a range not to impair the effects of the present invention. Suitable additives or adjuvants may, for example, be an antioxidant, a lubricant, a plasticizer, an ultraviolet absorber, a stabilizer, a pigment, a colorant, a filler, and a blowing agent. Further, in the present invention, it is possible to employ a production method wherein a catalyst having the transition metal compound and/or the cocatalyst supported on a suitable carrier, is employed.

In such a case, it is also possible to take a gas phase polymerization system employing no solvent. The gas phase polymerization system is carried out by means of a Ziegler-Natta type catalyst and is known to those skilled in the art.

The carrier may, for example, be an inorganic oxide such as silicon dioxide, diatomaceous earth, mica, smectite, montmorilonite, tetrasilicic mica, fluorinated tetrasilicic mica, a transition metal oxide such as titanium oxide, a lanthanide oxide such as lanthanum oxide or cerium oxide, or a polymer such as polystyrene or divinylbenzene crosslinked polystyrene.

When a polymerization catalyst comprising a transition metal compound of the present invention as a component, is employed, remarkably high activities and productivity per unit catalyst and high conomer copolymerizability can be attained as compared with conventional methods.

Further, when a polymerization catalyst comprising a transition metal compound of the present invention as a component, is employed, it is possible to obtain an olefin polymer or copolymer, or its wax easily with remarkably high activity and productivity, by changing the polymerization conditions, etc.

### BEST MODE FOR CARRYING OUT THE INVENTION

Now, the present invention will be described with reference to Examples. However, the present invention is by no means restricted to the following Examples.

In the following description, Me represents a methyl group, BInd a 4,5-benzo-1-indenyl group, Ind a 1-indenyl group, MeBInd a 2-methyl-4,5-benzoindenyl group, CP a cyclopentadienyl group, Ph a phenyl group, Bu a butyl group, and tBu a tertiary butyl group.

The analyses of the copolymers obtained in the respective Examples and Comparative Examples, were carried out by the following methods.

The 13C-NMR spectrum was measured by means of α-500, manufactured by Nippon Denshi K.K. using a chloroform-d solvent or a 1,1,2,2-tetrachloroethane-d2 solvent and using TMS as standard.

The molecular weights in Examples were obtained by weight average molecular weights as calculated as standard polystyrene by means of GPC (gel permeation chlomatgraphy).

A polymer or copolymer soluble in THF in room temperature, was measured by means of HLC-8020 manufactured by TOSOH CORPORATION using THF as a solvent, and a polymer or copolymer in soluble in THF, was measured by means of SSC-7100, manufactured by Senshu Kagaku K.K. using 1,2-dichlorobenzene at 135°C.

The measurement of the melting point by DSC was carried out by means of DSC200, manufactured by Seiko Denshi K.K. in a nitrogen stream at a temperature raising speed of 10°C/min.

### TEST EXAMPLES

### Preparation A of a transition metal compound

The rac-dimethylmethylenebis(4,5-benzo-1-indenyl)zirconium dichloride of the following formula (another name, rac-isopropylidenebis(4,5-benzo-1-indenyl)zirconium dichloride, rac{BInd-C(Me)₂-BInd}ZrCl₂) was prepared by the following synthesis.

4,5-benzoindene was prepared in accordance with a known method.

### A-1 Preparation of 1,1-isopropylidene-4,5-benzoindene.

The preparation of 1,1-isopropylidene-4,5-benzoindene was carried out with reference to the preparation of 6,6-diphenylfulvene disclosed in Can. J. Chem., 62, 1751 (1984). However, as the starting materials, acetone was used instead of benzophenone, and 4,5-benzoindene was used instead of cyclopentadiene.

### A-2 Preparation of isopropylidenebis-4, 5-benzo-1-indene

In an argon atmosphere, 21 mmol of 4,5-benzoindene was dissolved in 70 ml of THF, and at 0°C, an equivalent amount of BuLi was added, followed by stirring for 3 hours. DHF having 21 mmol of 1,1-isopropylidene-4,5-benzoindene (A-1) dissolved, was added, followed by stirring overnight at room temperature. Then, 100 ml of water and 150 ml of diethyl ether were added, followed by shaking, and the organic layer was separated, washed with a saturated sodium chloride aqueous solution and then dried over sodium sulfate, and the solvent was distilled off under reduced pressure. The obtained yellow solid was washed with hexane and dried to obtain 3.6 g (yield: 46%) of isopropylidenebis-4,5-benzo-1-indene.

By the 1H-NMR spectrum measurement, it had peaks at positions of from 7.2 to 8.0 ppm (m, 12H), 6.65 ppm (2H), 3.75 ppm (4H) and 1.84 ppm (6H).

The measurement was carried out using TMS as standard and CDCl₃ as a solvent.

### A-3 Preparation of rac-dimethylmethylenebis(4,5-benzo-1-indenyl)zirconium dichloride

In an argon atmosphere, 7.6 mmol of isopropylidenebis-4,5-benzo-1-indene (A-2) and 7.2 mmol of zirconium tetrakisdimethylamide i.e. {Zr(NMe₂)₄} were charged together with 50 ml of toluene, followed by stirring at 130°C for 10 hours. Toluene was distilled off under reduced pressure, and 100 ml of methylene chloride was added, followed by cooling to -78°C. 14.4 mmol of dimethylamine hydrochloride was slowly added, and the temperature was slowly raised to room temperature, followed by stirring for two hours. The solvent was distilled off, and then the obtained solid was washed with pentane and then with a small amount of THF, to obtain 0.84 g (yield: 21%) of yellowish orange rac-dimethylmethylenebis(4,5-benzo-1-indenyl)zirconium dichloride represented by the following formula:

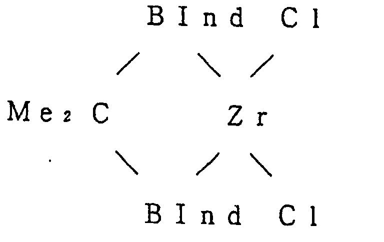

By the 1AH-NMR spectrum, it had peaks at positions of 8.01 ppm (m, 2H), 7.75 ppm (m, 2H), 7.69 ppm (d, 2H), from 7.48 to 7.58 ppm (m, 4H), 7.38 ppm (d, 2H), 7.19 ppm (d, 2H), 6.26 ppm (d, 2H) and 2.42 ppm (s, 6H).

The measurement was carried out using TMS as standard and CDCl₃ as a solvent.

The elemental analysis was carried out by means of an elemental analysis apparatus 1108 model (manufactured by Faisons Company, Italy), whereby the results being C63.86% and H3.98%, were obtained. The theoretical values are C65.39% and H4.16%.

### TEST EXAMPLES

### Preparation B of a transition metal compound

The rac-dimethylmethylene(1-indenyl)(4,5-benzo-1-indenyl)zirconium dichloride (another name, rac isopropylidene(1-indenyl)(4,5-benzo-1-indenyl)zirconium dichloride, rac {Ind-C(Me)₂-BInd}ZrCl₂) was prepared by the following synthesis.

### B-1 Preparation of isopropylidene(1-indene)(4,5-benzo-1-indene)

In an argon atmosphere, 14 mmol of indene was dissolved in 50 ml of THF, and at 0°C, an equivalent amount of BuLi was added, followed by stirring for 10 hours. 10 ml of THF having 13 mmol of 1,1-isopropylidene-4,5-benzoindene (A-1) dissolved therein, was added, followed by stirring at room temperature overnight. 50 ml of water and 100 ml of dietyl ether were added, followed by shaking, and the organic layer was separated, washed with a saturated sodium chloride aqueous solution and then, dried over sodium sulfate, whereupon the solvent was distilled under reduced pressure. The product was further purified by a column to obtain 2.5 g (yield: 59%) of isopropylidene(1-indene)(4,5-benzo-1-indene).

### B-2 Preparation of rac-dimethylmethylene(1-indenyl)(4,5-benzo-1-indenyl)zirconium dichloride

In an argon atmosphere, 6.5 mmol of isopropylidene(1-indene)(4,5-benzo-1-indene) (B-1) and 6.5 mmol of zirconium tetrakisdimethylamide i.e. {Zr(Nme₂)₄} were charged together with 40 ml of toluene, followed by stirring at 130°C for 10 hours. Under reduced pressure, toluene was distilled, and 100 ml of methylene chloride was added, followed by cooling to -78°C. 13 mmol of dimethylamine hydrochloride was slowly added, and the temperature was slowly raised to room temperature, followed by stirring for two hours. The solvent was distilled, and then, the obtained solid was washed with pentane and then with a small amount of methylene chloride to obtain 0.76 g (yield: 24%) of orange colored rac-dimethylmethylene(1-indenyl)(4,5-benzo-1-indenyl)zirconium dichloride.

By the 1H-NMR spectrum measurement, it had peaks at positions of from 7.05 to 8.04 ppm (m, 10H, excluding a peak at 7.17 ppm), 7.17 ppm (t, H), 6.73 ppm (d,H), 6.25 ppm (d, H), 6.18 ppm (d, H), 2.38 (m, 3H) and 2.41 ppm (m, 3H).

The measurement was carried out by using TMS as standard and CDCl₃ as a solvent.

### Preparation of a copolymer

### EXAMPLE 1 (ethylene-1-octene copolymerization)

Polymerization was carried out by means of an autoclave having a capacity of 10 l and equipped with a stirrer and a heating and cooling jacket.

4700 ml of dehydrated toluene and 100 ml of 1-octene were charged, followed by heating and stirring at an internal temperature of 50°C. About 100 l of nitrogen was introduced for bubbling to purge the interior of the system, and 8.4 mmol of triisobutylaluminum and 8.4 mmol, based on Al, of methyl alumoxane (PMAO, manufactured by TOSOH-AKUZO Company) were added. Ethylene was immediately introduced, and after the pressure was stabilized at 10 kg/cm²G, 0.84 µmol of the above catalyst rac {BInd-C(Me)₂-BInd}ZrCl₂ and about 30 ml of a toluene solution having 0.84 mmol of triisobutylaluminum dissolved therein were added to the autoclave from a catalyst tank installed above the autoclave. Polymerization was carried out for one hour while maintaining the internal temperature at 50°C and the ethylene pressure at 1.1Mpa. Immediately after the initiation of polymerization, the internal temperature rose to the maximum of 70°C by the polymerization heat. During the polymerization, the consumption rate of ethylene was monitored by a reaction liquid temperature/exterior temperature difference and a flow rate integrating meter, whereby even upon expiration of one hour of polymerization, the polymerization did not substantially deactivated and was continuing. After completion of the polymerization, the obtained polymerization reaction solution was gradually introduced into vigorously stirred excess methanol to let the polymer precipitate. It was dried under reduced pressure until the weight change would no longer be observed at 60°C, to obtain 460 g of the polymer.

### EXAMPLE 2 (ethylene-1-octene copolymerization)

Polymerization was carried out in the same manner as in Example 1 except that the amount of the catalyst employed was changed to 2.1 µmol, methylalumoxane was changed to 2.1 mmol, triisobutylaluminum was changed to 2.1 mmol, the amount of 1-octene was changed to 200 ml, and the amount of toluene was changed to 4600 ml. During the polymerization, the internal temperature rose to the maximum of 77°C by heat generation. However, even upon expiration of one hour of polymerization, the polymerization was not substantially deactivated and was continuing.

As a result of the same post treatment as in Example 1, 530 g of the polymer was obtained.

### EXAMPLE 3 (ethylene-1-octene copolymerization)

The polymerization and post treatment were carried out in the sane manner as in Example 1 except that the amount of 1-octene employed was changed to 500 ml, and the amount of toluene was changed to 4300 ml. During the polymerization, the internal temperature rose to the maximum of 80°C by heat generation.

As a result of the same post treatment as in Example 1, 859 g of the polymer was obtained.

### EXAMPLE 4 (ethylene-1-octene copolymerization)

The polymerization and post treatment were carried out in the same manner as in Example 3 except that the polymerization initiation temperature was changed to 90°C. During the polymerization, the internal temperature rose to the maximum of 125°C by heat generation.

As a result of the same post treatment as in Example 1, 1200 g of the polymer was obtained.

### EXAMPLE 5 (propylene polymerization)

Polymerization was carried out by means of an autoclave having a capacity of 1 l and equipped with a stirrer and a heating and cooling jacket.

480 ml of dehydrated toluene was charged, followed by heating and stirring at an internal temperature of 20°C. 8.4 mmol of triisobutylaluminum and 8.4 mmol, based on Al, of methylalumoxane (PMAO, manufactured by TOSOH-AKUZO Company) were added. Propylene was immediately introduced, and after the pressure was stabilized at 3 kg/cm²G, about 30 ml of a toluene solution having 0.84 µmol of catalyst rac{BInd-C(Me)₂-BInd}ZrCl₂ and 0.84 mmol of triisobutylaluminum dissolved therein, was added to the autoclave from a catalyst tank installed above the autoclave. Polymerization was carried out for one hour while maintaining the propylene pressure at 0.4 MPa. After initiation of the polymerization, the internal temperature rose to the maximum of 90°C by the polymerization heat. After completion of the polymerization, the obtained polymerization reaction solution was gradually introduced into vigorously stirred excess methanol to let the formed polymer precipitate. It was dried under reduced pressure until the weight change would no longer be observed at 60°C, to obtain 65 g of the polymer.

### EXAMPLE 6 (propylene polymerization)

The polymerization and post treatment were carried out in the same manner as in Example 5 except that the polymerization initiation temperature was changed to 50°C.

After initiation of the polymerization, the internal temperature rose to the maximum of 110°C by polymerization heat. As a result of the same post treatment as in Example 5, 85 g of the polymer was obtained.

### EXAMPLE 7 (ethylene polymerization)

Polymerization was carried out by means of an autoclave having a capacity of 1 l and equipped with a stirrer and a heating and cooling jacket. To 480 ml of toluene, 2 mmol of triisobutylaluminum and 8.4 mmol of methylalumoxane (PMAO, manufactured by TOSOH-AKUZO Company) were added, and a toluene solution having the above catalyst rac{BInd-C(Me)₂-BInd}ZrCl₂ dissolved in an amount of 0.84 µmol, was added at room temperature under a condition of an ethylene pressure of 1.1 MPa. Immediately, the polymerization initiated, and the internal temperature rose to about 75°C. Polymerization was carried out for about 5 minutes while maintaining the ethylene pressure at 1.1 MPa. Ethylene was quickly purged, and the obtained polymerization reaction solution was introduced into vigorously stirred excess methanol to let the polymer precipitate. It was dried under reduced pressure until the weight change would no longer be observed at 60°C, to obtain 36 g of the polymer.

### EXAMPLE 8 (ethylene-norbornane copolymerization)

Polymerization was carried out by means of an autoclave having a capacity of 10 l and equipped with a stirrer and a heating and cooling jacket. 4700 ml of dehydrated toluene and 100 ml of purified norbornane were charged, followed by heating and stirring at an internal temperature of 70°C. About 100 l of nitrogen was introduced for bubbling to purge the interior of the system, and 8.4 mmol of triisobutylaluminum and 84 mmol, based on Al, of methylalumoxane (MMAO, manufactured by TOSOH-AKUZO Company) were added. Ethylene was immediately introduced, and after the pressure was stabilized at 0.6 MPa, about 30 ml of a toluene solution having 8.4 µmol of the above catalyst rac{BInd-C(Me)₂-BInd}ZrCl₂ and 0.84 mmol of triisobutylaluminum dissolved therein, was added to the autoclave from a catalyst tank installed above the autoclave.

Immediately, the polymerization initiated, and the internal temperature rose to 85°C. Due to rapid consumption of ethylene, the supply of ethylene did not catch up, and the pressure decreased to a level of 0.25 MPa. Under such a state, polymerization was carried out for 0.5 hour. Even upon expiration of 0.5 hour, the polymerization was vigorously in progress. Ethylene was purged, and the obtained polymerization reaction solution was gradually introduced into vigorously stirred excess methanol to let the formed polymer precipitate. It was dried under reduced pressure until the weight change would no longer be observed at 60°C to obtain 430 g of the polymer.

MFR was measured in accordance with a method for testing the flow of a thermal plastic material under JIS K7210, and it was 0.164 g/10min under conditions of 190°C and a test load of 5 kgf.

By the DSC measurement, a melting point of 126°C and a glass transition point of -11°C were observed.

### COMPARATIVE EXAMPLE 1

With reference to Organometallics, 13, 964 (1994), racemic dimethylsilylenebis(2-methyl-4,5-benzoindenyl)zirconium dichloride of the following formula (rac{2-Me-BInd-SiMe₂-2-Me-BInd}ZrCl₂) was prepared.

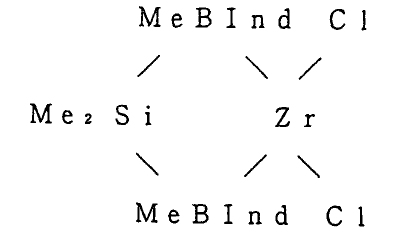

The polymerization and post treatment were carried out in the same manner as in Example 1 except that 2.1 µmol of racemic dimethylsilylenebis(2-methyl-4,5-benzoindenyl)zirconium dichloride was employed. After initiation of the polymerization, the internal temperature rose to the maximum of 104°C by polymerization heat. As a result, 510 g of the polymer was obtained.

### COMPARATIVE EXAMPLE 2

With reference to JP-A-7-053618, CGCT (constrained geometric structure) type Ti complex (tertiary butylamido)dimethyl(tetramethyl-η5-cyclopentadienyl)silanetitanium dichloride({CpMe₄-SiMe₂-NtBu}TiCl₂) was prepared.

The polymerization and post treatment were carried out in the same manner as in Example 2 except that the complex employed, was changed to 2.1 µmol of CGCT (constrained geometric structure) type Ti complex (tertiary butylamido)dimethyl(tetramethyl-η5-cyclopentadienyl)silanetitanium dichloride, and the polymerization was changed to two hours. From the amount of consumption of ethylene monitored, the polymerization was substantially completed in two hours. As a result, 76 g of the polymer was obtained.

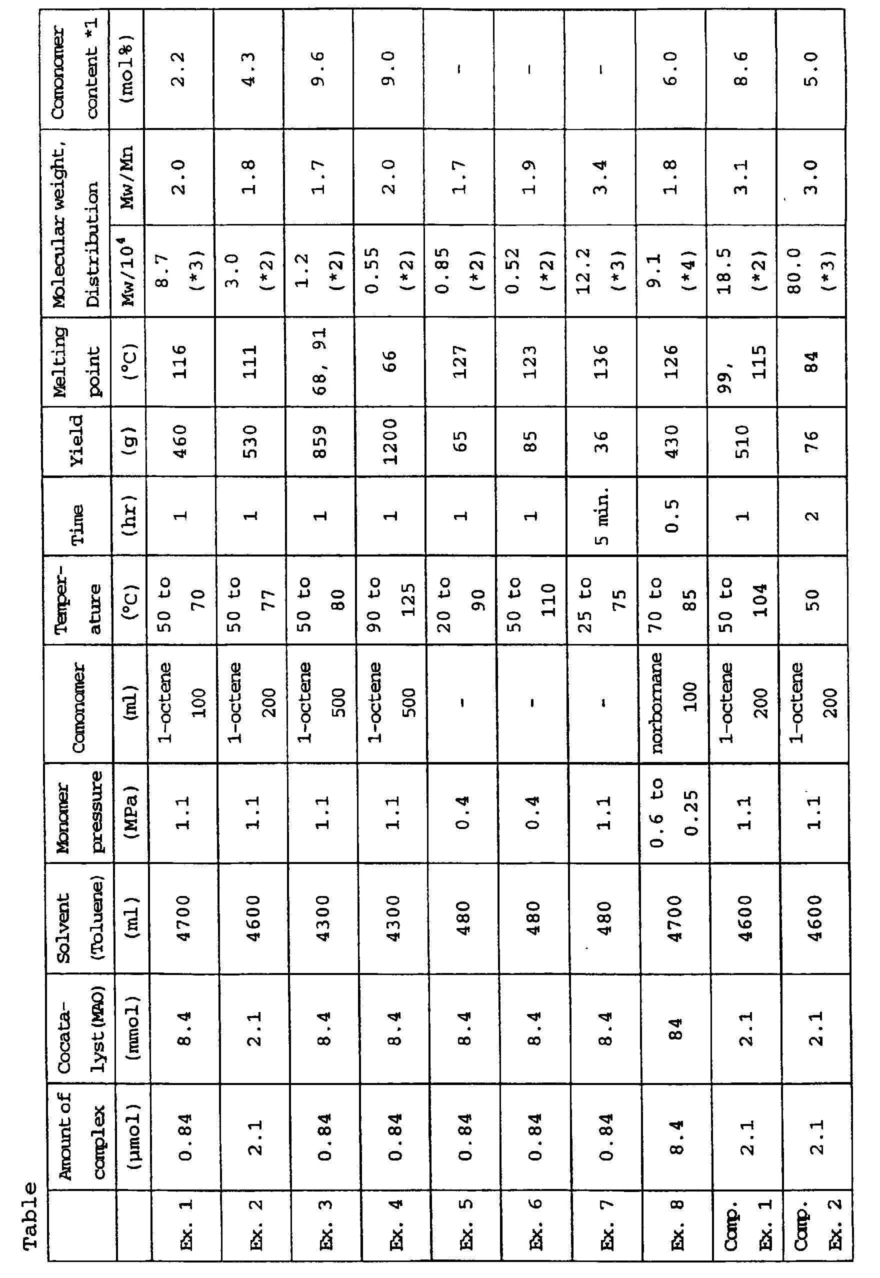

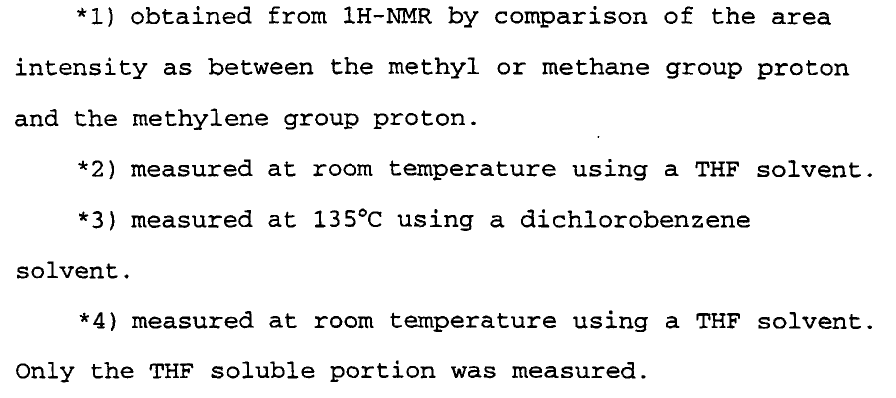

When a polymerization catalyst comprising a transition metal compound of the present invention as a component, is employed, remarkably high activity and productivity per unit catalyst, and excellent copolymerizability, are obtainable as compared with conventional methods.

Further, when a polymerization catalyst comprising a transition metal compound of the present invention as a component, is employed, it is possible to obtain an olefin polymer or copolymer, or an olefin wax or olefin copolymer wax, easily with remarkably high activities and productivity, by changing the polymerization conditions, etc.

## Claims

1. A polymerization catalyst for an olefin polymer or copolymer, characterized by comprising a transition metal compound of the following formula (1) or (2) as a component: 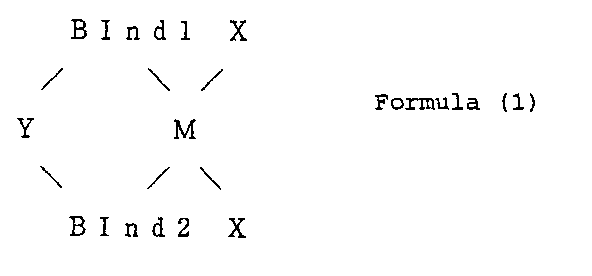 wherein BInd1 and BInd2 are unsubstituted or substituted benzoindenyl groups, and BInd1 and BInd2 may be the same or different from each other,
Y is a carbon atom which has bonds to BInd1 and BInd2 and which also has substituents, and a substituted methylene group which is substituted by hydrogen, a C₁₋₁₀ alkyl group, a c₆₋₁₄ aryl group, a c₆₋₁₂ alkylaryl group or a C₆₋₁₂ arylalkyl group, wherein the substituents may be the same or different from each other, or Y may have a cyclic structure,
X is hydrogen, halogen, an alkyl group, an aryl group, a silyl group, an alkoxy group or a dialkylamide group, and
M is Zr, Hf or Ti; 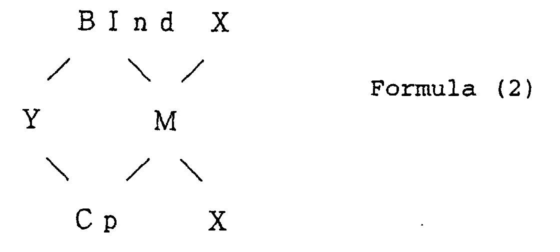 wherein BInd is an unsubstituted or substituted benzoindenyl group,
Cp is an unsubstituted or substituted cyclopentadienyl group, an unsubstituted or substituted indenyl group or an unsubstituted or substituted fluorenyl group,
Y is a carbon atom which has bonds to BInd and Cp and which also has substituents, and a substituted methylene group which is substituted by hydrogen, a C₁₋₁₀ alkyl group, a C₆₋₁₄ aryl group, a C₆₋₁₂ alkylaryl group or a C₆₋₁₂ arylalkyl group, wherein the substituents may be the same or different from each other, or Y may have a cyclic structure,
X is hydrogen, halogen, an alkyl group, an aryl group, a silyl group, an alkoxy group or a dialkylamide group, and
M is Zr, Hf or Ti.

2. The polymerization catalyst according to Claim 1, characterized in that M is Zr.

3. A method for producing an olefin polymer or copolymer, characterized by carrying out polymerization by means of a polymerization catalyst comprising a transition metal compound as defined in Claim 1 or 2 and a cocatalyst.

4. The method for producing an olefin copolymer according to Claim 3, characterized in that as monomers, ethylene and a C₃₋₂₀ cyclic olefin are used.

5. The method for producing an olefin copolymer, characterized in that as monomers, ethylene and norbornene are used.

6. The method for producing an olefin polymer or copolymer according to Claim 3, characterized in that as monomers, ethylene and R1HC=CHR2 (wherein R1 and R2 are hydrogen or C₁₋₂₀ alkyl groups, or R1 and R2 may together form a cyclic structure) are used to obtain an ethylene copolymer having a melting point of from 50 to 130°C.

7. The method according to Claim 3, characterized by producing an olefin polymer wax or an olefin copolymer wax, with a weight average molecular weight of from 500 to 100000.

8. The method for producing an olefin polymer or copolymer according to Claim 3, characterized in that the cocatalyst is an aluminoxane (or referred to as an alumoxane) of the following formula (3) or (4): 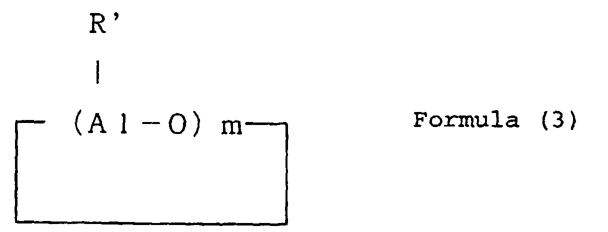 wherein R' is a C₁₋₅ alkyl group, a C₆₋₁₀ aryl group or hydrogen, and m is an integer of from 2 to 100, wherein the respective R' may be the same or different from one another; 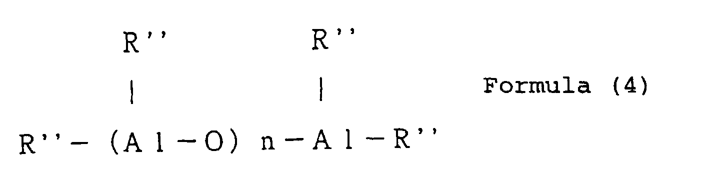 wherein R'' is a C₁₋₅ alkyl group, a C₆₋₁₀ aryl group or hydrogen, and n is an integer of from 2 to 100, wherein the respective R'' may be the same or different from one another.
